(19)

Europäisches Patentamt

European Patent Office

Office européen des brevets

(11)  **EP 4 782 488 A1**

(12)  **EUROPEAN PATENT APPLICATION**

(43) Date of publication:
29.07.2026  Bulletin 2026/31

(21) Application number: 25218866.9

(22) Date of filing: 02.12.2025

(51) International Patent Classification (IPC):
$C08J\ 9/00$ (2006.01)     $C08J\ 9/18$ (2006.01)
$C08J\ 9/232$ (2006.01)

(52) Cooperative Patent Classification (CPC):
C08J 9/18; B29C 44/3426; B29C 44/3461;
B29C 44/445; C08J 9/0061; C08J 9/232;
C08J 11/06; B29K 2023/14; C08J 2300/30;
C08J 2323/14; C08J 2323/16; C08J 2400/30;
C08J 2423/16; Y02W 30/62

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority:  02.12.2024  JP 2024209316

(71) Applicant: JSP Corporation
Tokyo 100-0005 (JP)

(72) Inventors:
• HIRA, Akinobu
Kanuma-shi, 3220014 (JP)
• TSUDA, Yuji
Kanuma-shi, 3220014 (JP)
• KABURAGI, Miho
Kanuma-shi, 3220014 (JP)

(74) Representative: Gille Hrabal
Partnerschaftsgesellschaft mbB
Patentanwälte
Brucknerstraße 20
40593 Düsseldorf (DE)

(54)  **METHOD FOR PRODUCING POLYPROPYLENE-BASED RESIN EXPANDED BEADS**

(57)     A method for producing a polypropylene-based resin expanded bead, including expanding polypropylene-based resin particles, wherein the resin particles are composed of a mixed resin of a virgin material and a polypropylene-based resin recycled material; the recycled material contains a propylene copolymer as a base material resin; the virgin material has a melting point MP1 of 130°C or more and less than 150°C; a melting point MP2 (°C) of the recycled material and the melting point MP1 (°C) of the virgin material satisfy a specific relationship; a melt flow rate MFR2 (g/10 minutes) of the recycled material and a melt flow rate MFR1 (g/10 minutes) of the virgin material satisfy a specific relationship; and a crystallization temperature CP2 (°C) of the recycled material and a crystallization temperature CP1 (°C) of the virgin material satisfy a specific relationship.

EP 4 782 488 A1

**Description**

Field of the Invention

The present invention relates to a method for producing polypropylene-based resin expanded beads.

Background of the Invention

Molded articles of polypropylene-based resin expanded beads obtained by molding polypropylene-based resin expanded beads are lightweight, and exhibit excellent cushioning properties and toughness. Accordingly, molded articles of polypropylene-based resin expanded beads are widely used as containers for transporting food and the like, packaging or cushioning materials for electrical and electronic components, precision parts, and automobile parts, building materials such as thermal insulation materials for houses, and shock absorbing materials such as automobile parts.

Furthermore, with the recent promotion of a recycling-oriented society, there is an increasing social demand not only for the reuse of scrap and waste materials, but also for the use of waste discarded by end users as recycled materials (post-consumer materials).

JP 2024-41662 A discloses a method for producing polypropylene-based resin expanded beads having a bulk density in a specified range, the method being intended to provide a black molded article of expanded beads having excellent appearance and physical properties by using a post-consumer material of a molded article of polypropylene-based resin expanded beads including carbon black.

In recent years, environmentally friendly products that can further reduce environmental impact have been desired. As one approach to produce environmentally friendly products, polypropylene-based resin expanded beads that can be molded at low molding pressure when producing molded articles of expanded beads are desired.

The present invention has been made in view of the above problem, and an object of the present invention is to provide a method for producing polypropylene-based resin expanded beads which are moldable at low molding pressure even when a recycled material of polypropylene-based resin molded articles is used.

Summary of the Invention

The present inventors have found that the above problem can be solved by producing polypropylene-based resin expanded beads using a virgin material and a recycled material of a molded article of polypropylene-based resin that satisfy specific relationships, and have completed the present invention.

Accordingly, the present invention is as follows.

<1> A method for producing a polypropylene-based resin expanded bead, including expanding polypropylene-based resin particles, wherein the polypropylene-based resin particles are composed of a mixed resin of a virgin material containing, as a base material resin, at least one propylene copolymer selected from the group consisting of an ethylene-propylene copolymer, a butene-propylene copolymer, and an ethylene-butene-propylene copolymer, and a polypropylene-based resin recycled material; the recycled material contains, as a base material resin, at least one propylene copolymer selected from the group consisting of an ethylene-propylene copolymer, a butene-propylene copolymer, and an ethylene-butene-propylene copolymer; the virgin material has a melting point MP1 of 130°C or more and less than 150°C; a difference between a melting point MP2 (°C) of the recycled material and the melting point MP1 (°C) of the virgin material satisfies the relationship of the following formula (1); a difference between a melt flow rate MFR2 (g/10 minutes) of the recycled material and a melt flow rate MFR1 (g/10 minutes) of the virgin material satisfies the relationship of the following formula (2); and a difference between a crystallization temperature CP2 (°C) of the recycled material and a crystallization temperature CP1 (°C) of the virgin material satisfies the relationship of the following formula (3):

$$-10 < MP2 - MP1 < 10 \qquad (1)$$

$$0 \le MFR2 - MFR1 \le 10 \qquad (2)$$

$$2 < CP2 - CP1 < 12 \qquad (3).$$

<2> The method for producing a polypropylene-based resin expanded bead according to <1>, wherein an ash content of the recycled material is 500 ppm by mass or more and 2,000 ppm by mass or less.

<3> The method for producing a polypropylene-based resin expanded bead according to <1> or <2>, wherein the crystallization temperature CP2 of the recycled material is 105°C or more and 115°C or less.
<4> The method for producing a polypropylene-based resin expanded bead according to any one of <1> to <3>, wherein a ratio of a flexural modulus of the virgin material to a flexural modulus of the recycled material is 0.5 or more and 2.0 or less.
<5> The method for producing a polypropylene-based resin expanded bead according to any one of <1> to <4>, wherein a mixing ratio of the virgin material is 10 to 90% by mass and a mixing ratio of the recycled material is 10 to 90% by mass, provided that a total amount of the virgin material and the recycled material being 100% by mass.
<6> The method for producing a polypropylene-based resin expanded bead according to any one of <1> to <5>, wherein the recycled material is derived from a molded article of polypropylene-based resin expanded beads.
<7> A method for producing a molded article of expanded beads, including in-mold molding the polypropylene-based resin expanded beads obtained by the method according to any one of <1> to <6>.

The present invention provides a method for producing polypropylene-based resin expanded beads which are moldable at low molding pressure.

Brief Description of the Drawings

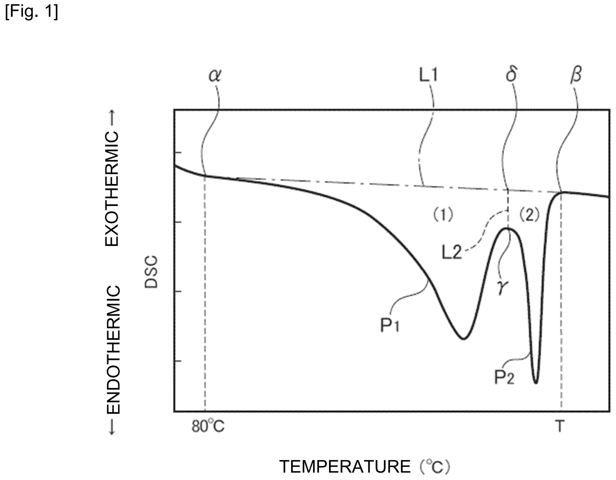

[Fig. 1] Fig. 1 illustrates a DSC curve obtained in the first heating of polypropylene-based resin expanded beads.

Detailed Description of the Invention

[Method for producing polypropylene-based resin expanded beads]

The method for producing polypropylene-based resin expanded beads of the present invention (hereinafter simply referred to as the method for producing expanded beads of the present invention, or the method of the present invention) includes expanding polypropylene-based resin particles containing polypropylene-based resin as a base material resin (hereinafter also simply referred to as resin particles), thereby producing polypropylene-based resin expanded beads (hereinafter also simply referred to as expanded beads). The polypropylene-based resin particles are composed of a mixed resin of a virgin material containing, as a base material resin, at least one propylene copolymer (B) selected from the group consisting of an ethylene-propylene copolymer, a butene-propylene copolymer, and an ethylene-butene-propylene copolymer, and a recycled material of a polypropylene-based resin molded article; the recycled material contains, as a base material resin, at least one propylene copolymer (R) selected from the group consisting of an ethylene-propylene copolymer, a butene-propylene copolymer, and an ethylene-butene-propylene copolymer. The virgin material has a melting point MP1 of 130°C or more and less than 150°C, the difference between the melting point MP2 (°C) of the recycled material and the melting point MP1 (°C) of the virgin material satisfies the relationship of the following formula (1), the difference between the melt flow rate MFR2 (g/10 minutes) of the recycled material and the melt flow rate MFR1 (g/10 minutes) of the virgin material satisfies the relationship of the following formula (2), and the difference between the crystallization temperature CP2 (°C) of the recycled material and the crystallization temperature CP1 (°C) of the virgin material satisfies the relationship of the following formula (3). In the present description, the base material resin refers to the main component of the resin component constituting the virgin material, recycled material, resin particles or expanded beads. Specifically, the content of the base material resin in the resin component is preferably 70% by mass or more, more preferably 80% by mass or more, and further preferably 90% by mass or more. In this description, a numerical range expressed by "to" means a range including the numerical values described before and after "to" as the lower limit value and the upper limit value, respectively.

$$-10 < MP2 - MP1 < 10 \qquad (1)$$

$$0 \leq MFR2 - MFR1 \leq 10 \qquad (2)$$

$$2 < CP2 - CP1 < 12 \qquad (3)$$

In the method for producing expanded beads of the present invention, by using, as a raw material for resin particles, a combination of a virgin material and a recycled material of a polypropylene-based resin molded article in a specific relationship, expanded beads having excellent moldability and less prone to defects such as dimensional shrinkage at low molding pressure can be provided. Furthermore, in particular, even when a large molded article is formed from the polypropylene-based resin expanded beads produced by the method of the present invention (hereinafter may also be simply referred to as a molded article of expanded beads or molded article), the molded article after molding exhibits excellent dimensional stability under low molding pressure. In addition, when the expanded beads obtained by the method of the present invention are molded, favorable molded articles can be obtained without the heat curing that is usually performed after molding, thereby further reducing environmental impact. In the present description, the polypropylene-based resin refers to a polymer in which the content of the structural unit derived from propylene is 50% by mass or more, preferably 70% by mass or more, and more preferably 90% by mass or more.

<Virgin material>

In the present description, the term "virgin material" refers to a raw material that has not been subjected to heat treatment after being marketed. Furthermore, the propylene copolymer (B) as a base material resin of the virgin material includes at least one selected from the group consisting of an ethylene-propylene copolymer, a butene-propylene copolymer, and an ethylene-butene-propylene copolymer, preferably at least one selected from the group consisting of an ethylene-propylene copolymer and an ethylene-butene-propylene copolymer, and more preferably an ethylene-propylene copolymer. As used herein, the term "base material resin" means a resin material serving as the main constituent of the raw material. The phrase "propylene copolymer (B) as the base material resin of the virgin material" means that the main resin material constituting the virgin material is the propylene copolymer (B). The content of the propylene copolymer (B) in the virgin material resin is preferably 70% by mass or more, more preferably 90% by mass or more, and most preferably 95% by mass or more. Other resins may also be incorporated into the base material resin, provided that the object and effect of the present invention is not adversely affected.

When the propylene copolymer (B) contains an ethylene component, the content of the ethylene component in the propylene copolymer (B) is preferably 1% by mass or more, and more preferably 2% by mass or more from the viewpoint of the improvement in the moldability of the molded article of expanded beads under lower molding pressure, and preferably 15% by mass or less, more preferably 10% by mass or less, and further preferably 5% by mass or less from the viewpoint of making it easier to obtain favorable molded articles in a stable manner. When the propylene copolymer (B) contains a butene component, the content of the butene component in the propylene copolymer (B) is preferably 1% by mass or more, and more preferably 2% by mass or more from the viewpoint of the improvement in the moldability of the molded article of expanded beads under lower molding pressure, and preferably 15% by mass or less, more preferably 10% by mass or less, and further preferably 5% by mass or less from the viewpoint of making it easier to obtain favorable molded articles in a stable manner.

The content of the monomer components (the ethylene component and the butene component) in the propylene copolymer (B) may be determined by a known method using IR spectrum. Specifically, the method described in the Handbook of Polymer Analysis (Kobunshi Bunseki Handbook) (edited by the Research Committee for Polymer Analysis of the Japan Society for Analytical Chemistry, published by Kinokuniya Bookstore, January 1995; pages 615-616, "II.2.3 2.3.4 Propylene/Ethylene Copolymers," and pages 618-619, "II.2.3 2.3.5 Propylene/Butene Copolymers") is employed, namely, a method in which quantification is carried out based on the relationship between the absorbance of ethylene and butene, corrected by predetermined coefficients, and the thickness and other parameters of film-shaped test specimens. More specifically, the content is measured by the method described in Examples.

(Other polymers)

The virgin material may also contain polymers other than the propylene copolymer (B), provided that the object and effect of the present invention is not adversely affected. Examples of other polymers include a thermoplastic resin such as a polypropylene-based resin other than the propylene copolymer (B), a polybutene-based resin, and a polystyrene-based resin, and a thermoplastic elastomer (e.g., a polybutadiene elastomer; styrene-butadiene, styrene-isoprene, styrene-butadiene-styrene, styrene-isoprene-styrene block copolymers, and a hydrogenated product thereof). The content of other polymers in the virgin material is preferably 10% by mass or less, and more preferably 5% by mass or less.

(Additives)

The virgin material may contain an additive, and, if necessary, additional additives may be added. Examples of additives include an antioxidant, a UV protector, a light stabilizer, an anti-static agent, a flame retardant, a flame retardant additive, a metal deactivator, a conductive filler, a foam stabilizer, and a colorant.
The total content of these additives is preferably 20 parts by mass or less, more preferably 10 parts by mass or less, and further preferably 5 parts by mass or less based on 100 parts by mass of the propylene copolymer (B).
When the virgin material contains two or more propylene copolymers (B) or when the virgin material contains a polymer other than the propylene copolymer (B) and an additive, the measurement of the virgin material described later is performed using a virgin material containing two or more propylene copolymers (B) or a virgin material containing other polymers and/or an additive as a sample.

(Melting point MP1)

The melting point MP1 of the virgin material is 130°C or more, preferably 134°C or more, further preferably 138°C or more, and even more preferably 140°C or more from the viewpoint of suppression of shrinkage after molding to improve moldability, and is less than 150°C, preferably 148°C or less, more preferably 146°C or less, and further preferably 144°C or less from the viewpoint of the improvement in the moldability of the molded article of expanded beads under lower molding pressure.

The melting point MP1 is measured using the virgin material as a specimen in accordance with JIS K 7121:2012. Specifically, "(2) The case of measuring the melting temperature after carrying out a certain heat treatment" is employed to adjust the condition of the specimen. After heating the specimen from 23°C to 200°C at a heating rate of 10°C/minute under a condition of a nitrogen inflow of 30 mL/minute, the specimen is held at the temperature for 10 minutes, and then cooled to 23°C at a cooling rate of 10°C/minute, and heated again to 200°C at a heating rate of 10°C/minute, thereby obtaining a DSC curve (a DSC curve of the second heating). Subsequently, the peak temperature of the melting peak in the DSC curve is determined, and the value can be defined as the melting point of the virgin material. When multiple melting peaks are observed in the DSC curve, the peak temperature of the melting peak with the greatest height above the baseline is taken as the melting point MP1. At this point, a comparison of the areas of the individual melting peaks (i.e., the heat of fusion), separated at the valley temperatures of the DSC curve between the respective peak temperatures, allows determination of the melting peak with the largest area. The valley temperatures of the DSC curve may be determined with reference to the derivative DSC curve (DDSC), at the temperatures at which the ordinate of the derivative curve is zero.

(Melt flow rate MFR1)

The melt flow rate MFR1 of the virgin material is not particularly limited as long as the relationship of the formula (2) is satisfied, but to obtain expanded beads having good moldability easily in a stable manner, the melt flow rate MFR1 is preferably 1 g/10 minutes or more, more preferably 3 g/10 minutes or more, and further preferably 5 g/10 minutes or more, and preferably 15 g/10 or less, more preferably 12 g/10 minutes or less, and further preferably 9 g/10 minutes or less.

The melt flow rate MFR1 of the virgin material is measured in accordance with JIS K 7210-1:2014 at 230°C under a load of 2.16 kg.

(Crystallization temperature CP1)

The crystallization temperature CP1 of the virgin material is not particularly limited as long as the relationship of the formula (3) is satisfied, but to obtain expanded beads having good moldability easily in a stable manner, the crystallization temperature CP1 of the virgin material is preferably 90°C or more, more preferably 93°C or more, and further preferably 95°C or more, and preferably 125°C or less, more preferably 120°C or less, further preferably 115°C or less, and even more preferably 110°C or less, and still more preferably 105°C or less.

The crystallization temperature CP1 of the virgin material is measured in accordance with JIS K 7121:2012 using a heat-flux differential scanning calorimeter. When multiple crystallization peaks are observed in the DSC curve, the peak temperature of the crystallization peak with the greatest area is taken as the crystallization temperature CP1.

(Heat of fusion)

The heat of fusion of the virgin material is preferably 30 J/g or more, more preferably 40 J/g or more, further preferably 50 J/g or more, even more preferably 55 J/g or more, and still more preferably 58 J/g or more, and preferably 100 J/g or less, more preferably 90 J/g or less, further preferably 80 J/g or less, even more preferably 75 J/g or less, and still more preferably 74 J/g or less from the viewpoint of the improvement in the moldability of the molded article of expanded beads under lower molding pressure.

The heat of fusion of the virgin material is measured in accordance with JIS K 7122:2012 using a heat-flux differential scanning calorimeter. When multiple melting peaks are observed in the DSC curve, the sum of the areas of the melting peaks is taken as the heat of fusion.

(Flexural modulus F1)

The flexural modulus F1 of the virgin material is preferably 800 MPa or more, more preferably 850 MPa or more, further preferably 900 MPa or more, and even more preferably 950 MPa or more, and preferably 1,600 MPa or less, more preferably 1,500 MPa or less, further preferably 1,400 MPa or less, even more preferably 1,300 MPa or less, and still more preferably 1,200 MPa or less from the viewpoint of suppression of the shrinkage of the molded article to improve moldability.

The flexural modulus F1 of the virgin material is measured in accordance with JIS K 7171:2016.

<Polypropylene-based resin recycled material>

The polypropylene-based resin recycled material (hereinafter also simply referred to as recycled material) refers to a polypropylene-based resin material recovered after the production of molded articles or the like of polypropylene-based resin, including post-use materials. The recycled material is a material that has undergone at least one heat treatment, in contrast to virgin material. For example, recovered polypropylene-based resin molded articles may be pulverized, or pulverized and then melted, and pelletized, whereby they can be used as a raw material for resin particles. The origin of the recovered polypropylene-based resin is not particularly limited, provided that the above formulas (1) to (3) are satisfied; however, for example, it is preferable to use a recycled material derived from a molded article of polypropylene-based resin expanded beads.

Molded articles of polypropylene-based resin are obtained by molding polypropylene-based resin, and molded articles of polypropylene-based resin expanded beads use polypropylene-based resin expanded beads as a raw material. The molded article of polypropylene-based resin expanded beads according to the present invention, described later, refers to a molded article obtained, among the aforementioned molded articles of polypropylene-based resin expanded beads, by in-mold molding of the polypropylene-based resin expanded beads produced by the method of the present invention.

(Method for preparing recycled material)

Recovered used polypropylene-based resin molded articles may contain materials other than the polypropylene-based resin molded articles themselves, such as packaging bags or labels, and it is therefore preferable to remove such foreign matter. The foreign matter may be removed either by visual sorting conducted by an operator or by means of a sorting machine or the like.

To crush the polypropylene-based resin molded article, a crusher is preferably used. Crushers include compression crushers, shear crusher, impact crushers, and the like. As for crushing methods, materials that have been roughly crushed once using an impact crusher may be further finely crushed using a shear crusher or the like, or may be crushed in a single step using a shear crusher or the like. In particular, it is economically advantageous and preferable to perform crushing in a single step while controlling the particle size of the crushed product to be uniform using a shear crusher equipped with a punching metal or a screen at the outlet. The size of the crushed product is not particularly limited, but is preferably 1 mm or more and 30 mm or less.

It is preferable that the resulting crushed product be subjected to heating and volume reduction to form a molten ingot. The machines used for heating and volume reduction include an extruder and a press. The temperature during volume reduction is not particularly limited; however, to avoid thermal degradation of the polypropylene-based resin, it is preferably as low as possible, and more preferably 220°C or less and at or above the melting point of the resin. Preferably, the molten ingot is crushed again using the aforementioned crusher or the like, melted in an extruder, and pelletized to obtain pellets of the polypropylene-based resin recycled material. The aforementioned crusher may be used. A single-screw extruder, a twin-screw extruder, or the like may be used, but a single-screw extruder is preferred in order to prevent resin degradation. The temperature of the extruder is not particularly limited; however, to avoid thermal degradation of the polypropylene-based resin, it is preferably as low as possible, and more preferably 220°C or less and at or above the melting point of the resin. The polypropylene-based resin melted in the extruder is preferably passed through a filter to remove foreign matter. Filters such as woven wire mesh and sintered metal may be used, but it is economical and preferable to use woven wire mesh. Examples of pelletizing methods for the molten polypropylene-based resin include an underwater cutting method, in which the molten resin is continuously cut with a rotary cutter mounted in front of the die and solidified while being extruded from the die into water or mist, and a strand cutting method, in which the molten resin is continuously extruded in the form of strands from the die, cooled and solidified in a water bath, and then cut with a cutter. Among them, the strand cutting method is economically advantageous and preferable. The size of the pellets is not particularly limited, but the average mass is preferably 1 to 30 mg per pellet. By the above recovery method, the recycled material according to the present invention undergoes two or more heating operations, in contrast to the virgin material.

(Base material resin)

The propylene copolymer (R), which is a base material resin of the recycled material, contains at least one selected from the group consisting of an ethylene-propylene copolymer, a butene-propylene copolymer, and an ethylene-butene-propylene copolymer, and preferably an ethylene-propylene copolymer. As used herein, the term "base material resin" means a resin material serving as the main constituent of the raw material. The phrase "propylene copolymer (R) as the base material resin of the recycled material" means that the main resin material constituting the recycled material is the propylene copolymer (R). The content of the propylene copolymer (R) in the recycled material resin is preferably 80% by mass or more, more preferably 90% by mass or more, and most preferably 95% by mass or more. Other resins may also be incorporated into the base material resin, provided that the object and effect of the present invention is not adversely affected. The propylene copolymer (R) may be the same as or different from the aforementioned propylene copolymer (B).

In particular, the propylene copolymer (R) is preferably the same as the propylene copolymer (B); for example, when the propylene copolymer (R) contains an ethylene-propylene copolymer, the propylene copolymer (B) preferably contains an ethylene-propylene copolymer.

When the propylene copolymer (R) contains an ethylene component, the content of the ethylene component in the propylene copolymer (R) is preferably 1% by mass or more, and more preferably 2% by mass or more from the viewpoint of the improvement in the moldability of the molded article of expanded beads under lower molding pressure, and preferably 15% by mass or less, more preferably 10% by mass or less, and further preferably 5% by mass or less from the viewpoint of making it easier to obtain favorable molded articles in a stable manner. When the propylene copolymer (R) contains a butene component, the content of the butene component in the propylene copolymer (R) is preferably 1% by mass or more, and more preferably 2% by mass or more from the viewpoint of the improvement in the moldability of the molded article of expanded beads under lower molding pressure, and preferably 15% by mass or less, more preferably 10% by mass or less, and further preferably 5% by mass or less from the viewpoint of making it easier to obtain favorable molded articles in a stable manner.

The content of the monomer components (the ethylene component and the butene component) in the propylene copolymer (R) may be measured in the same manner as that of the propylene copolymer (B) of the virgin material described above.

The recycled material may also contain polymers other than the propylene copolymer (R), provided that the object and effect of the present invention is not adversely affected. Examples of other polymers include the aforementioned thermoplastic resins and thermoplastic elastomers optionally present in the virgin material. The recycled material may contain the additives usable with the virgin material, or such additives may be added. As with the virgin material, when the recycled material contains two or more propylene copolymers (R) or when the recycled material contains a polymer other than the propylene copolymer (R) and/or an additive, the measurement of the recycled material described later is performed using a recycled material containing two or more propylene copolymers (R) or a recycled material containing other polymers and/or an additive as a sample.

(Melting point MP2)

The melting point MP2 of the recycled material is not particularly limited as long as the relationship of the formula (1) is satisfied, but is preferably 120°C or more, more preferably 125°C or more, further preferably 130°C or more, even more preferably 140°C or more, still more preferably 142°C or more, and yet more preferably 144°C or more from the viewpoint of suppression of shrinkage after molding to improve moldability. The melting point MP2 of the recycled material is preferably less than 160°C, more preferably 155°C or less, further preferably 150°C or less, and even more preferably 148°C or less from the viewpoint of the improvement in the moldability of the molded article of expanded beads under lower molding pressure. The melting point MP2 is measured using the recycled material as a specimen, in the same manner as the measurement of the melting point MP1.

(Melt flow rate MFR2)

The melt flow rate MFR2 of the recycled material is not particularly limited as long as the relationship of the formula (2) is satisfied, but to obtain expanded beads having good moldability easily in a stable manner, the melt flow rate MFR2 is preferably 3 g/10 minutes or more, more preferably 5 g/10 minutes or more, and further preferably 7 g/10 minutes or more, and preferably 20 g/10 or less, more preferably 15 g/10 minutes or less, and further preferably 13 g/10 minutes or less. The melt flow rate MFR2 of the recycled material is measured in the same manner as the measurement of the MFR1 at 230°C under a load of 2.16 kg.

(Crystallization temperature CP2)

The crystallization temperature CP2 of the recycled material is not particularly limited as long as the relationship of the formula (3) is satisfied, but to obtain expanded beads having good moldability easily in a stable manner, the crystallization temperature CP2 of the recycled material is preferably 95°C or more, more preferably 100°C or more, and further preferably 105°C or more, and preferably 130°C or less, more preferably 125°C or less, further preferably 120°C or less, and even more preferably 115°C or less, and still more preferably 113°C or less. The crystallization temperature CP2 of the recycled material is measured in the same manner as the measurement of the crystallization temperature CP1.

(Ash content)

The ash content of the recycled material is preferably 300 ppm by mass or more, more preferably 400 ppm by mass or more, and further preferably 500 ppm by mass or more, and preferably 2,000 ppm by mass or less, more preferably 1,800 ppm by mass or less, further preferably 1,600 ppm by mass or less, and most preferably 1,200 ppm by mass or less from the viewpoint of facilitating adjustment of the crystallization temperature to a desired range.

The ash content of the recycled material is measured in accordance with JIS K 6226-2:2003. The recycled material is preferably derived from a molded article of polypropylene-based resin expanded beads. In this case, since the recycled material contains inorganic substances such as nucleating agents derived from molded articles of expanded beads, it is particularly important that its ash content fall within the aforementioned specified range.

(Flexural modulus F2)

The flexural modulus F2 of the recycled material is preferably 600 MPa or more, more preferably 700 MPa or more, further preferably 800 MPa or more, even more preferably 900 MPa or more, and still more preferably 1,000 MPa or more, and preferably 1,600 MPa or less, more preferably 1,500 MPa or less, and further preferably 1,400 MPa or less from the viewpoint of suppression of the shrinkage of the molded article to improve moldability. The flexural modulus F2 of the recycled material is measured in the same manner as the measurement of the flexural modulus F1.

(Heat of fusion)

The heat of fusion of the recycled material is preferably 40 J/g or more, more preferably 50 J/g or more, further preferably 60 J/g or more, even more preferably 65 J/g or more, and still more preferably 70 J/g or more, and preferably 100 J/g or less, more preferably 90 J/g or less, further preferably 85 J/g or less, even more preferably 80 J/g or less, and still more preferably 78 J/g or less from the viewpoint of the improvement in the moldability of the molded article of expanded beads under lower molding pressure. The heat of fusion of the recycled material is measured in the same manner as the measurement of the heat of fusion of the virgin material.

(Formula (1): Difference MP2 - MP1)

The difference between the melting point MP2 (°C) of the recycled material and the melting point MP1 (°C) of the virgin material (MP2 - MP1) satisfies the relationship of the following formula (1).

$$-10 < MP2 - MP1 < 10 \qquad (1)$$

By using raw materials that satisfy this relationship, expanded beads that can be molded into favorable molded articles at low molding pressure can be provided. Specifically, a molded article obtained by molding the expanded beads produced by the method of the present invention is unlikely to suffer from defects such as dimensional shrinkage even under low molding pressure. In particular, when the molded article is large, it exhibits excellent dimensional stability after molding under low molding pressure. From the above point of view, the difference MP2 - MP1 is preferably -5°C or more, more preferably -2°C or more, further preferably 0°C or more, even more preferably 2°C or more, and still more preferably 3°C or more, and preferably 8°C or less, more preferably 6°C or less, and further preferably 5°C or less.

(Formula (2): Difference MFR2 - MFR1)

The difference between the melt flow rate MFR2 (g/10 minutes) of the recycled material and the melt flow rate MFR1 (g/10 minutes) of the virgin material (MFR2 - MFR1) satisfies the relationship of the following formula (2).

$$0 \leq MFR2 - MFR1 \leq 10 \qquad (2)$$

By using raw materials that satisfy this relationship, the raw materials are sufficiently mixed, and the expanded beads obtained by the method of the present invention readily exhibit a high closed-cell ratio. Furthermore, molded articles obtained by molding the expanded beads are unlikely to suffer from defects such as dimensional shrinkage even under low molding pressure. Moreover, when the molded article is large, it exhibits excellent dimensional stability after molding under low molding pressure. From the above point of view, the difference MFR2 - MFR1 is preferably 8 g/10 minutes or less, more preferably 6 g/10 minutes or less, and further preferably 4 g/10 minutes or less, and preferably 1 g/10 minutes or more, and more preferably 2 g/10 minutes or more.

(Formula (3): Difference CP2 - CP1)

The difference between the crystallization temperature CP2 of the recycled material and the crystallization temperature CP1 of the virgin material (CP2 - CP1) satisfies the relationship of the following formula (3).

$$2 < CP2 - CP1 < 12 \qquad (3)$$

By using raw materials that satisfy this relationship, expanded beads that can be molded into favorable molded articles at low molding pressure can be provided. Specifically, a molded article obtained by molding the expanded beads produced by the method of the present invention is unlikely to suffer from defects such as dimensional shrinkage even under low molding pressure. In particular, when the molded article is large, it exhibits excellent dimensional stability after molding under low molding pressure. From the above point of view, the difference CP2 - CP1 is preferably 3°C or more, more preferably 5°C or more, and further preferably 7°C or more, and preferably 11°C or less.

By using the raw materials satisfying the formulas (1) to (3), and due to the specific relationships among the melting point relevant to low-pressure molding, and the MFR and the crystallization temperature associated with post-molding shrinkage, and the mutually related formulas (1) to (3), the molded article obtained by molding the expanded beads produced by the method of the present invention is unlikely to suffer from defects such as dimensional shrinkage even under low molding pressure. Furthermore, when the molded article is large, it exhibits excellent dimensional stability after molding under low molding pressure. In addition, when the expanded beads obtained by the method of the present invention are molded, favorable molded articles can be obtained without the heat curing that is usually performed after molding, thereby further reducing environmental impact.

(Ratio F1/F2)

The ratio of the flexural modulus of the virgin material F1 to the flexural modulus of the recycled material F2 (F1/F2) is preferably 0.5 or more, and more preferably 0.7 or more, and preferably 2.0 or less, more preferably 1.7 or less, and further preferably 1.5 or less from the viewpoint of suppression of the shrinkage of the molded article to improve moldability.

<Polypropylene-based resin particles>

The polypropylene-based resin particles are composed of a mixed resin of the aforementioned virgin material and recycled material. The resin particles obtained by the method of the present invention may be single-layer particles composed of the mixed resin, or multilayer particles having a core layer composed of the mixed resin and a covering layer on the surface of the core layer. Since dimensional shrinkage after molding is mainly attributable to the expanded portion, it is important that, whether the particles are single-layered or multilayered, the resin constituting the expanded portion is composed of the aforementioned mixed resin of the virgin material and the recycled material.

(Mixed resin)

The mixed resin of the virgin material and the recycled material may be obtained by feeding the virgin material, the recycled material, and, if necessary, an additive into an extruder, and then melting and kneading the fed materials. Then, the molten and kneaded mixed resin is extruded from the extruder and pelletized into a predetermined shape and mass, thereby obtaining propylene-based resin particles composed of the mixed resin.

The content of the virgin material in the mixed resin is preferably 3% by mass or more, more preferably 5% by mass or more, and even more preferably 7% by mass or more, relative to the total amount of the virgin material and the recycled material taken as 100% by mass, from the viewpoint of stability of physical properties of the resulting expanded beads and molded articles, and is preferably 97% by mass or less, more preferably 95% by mass or less, further preferably 93% by mass or less, even more preferably 90% by mass or less, and still more preferably 88% by mass or less from the viewpoint of further reduction of environmental impact.

In the present invention, a favorable molded article of expanded beads can be obtained even when the mixing ratio of the recycled material is increased to reduce environmental impact. It is preferable that the mixing ratio of the virgin material be 10 to 90% by mass and the mixing ratio of the recycled material be 10 to 90% by mass (provided that the total amount of the virgin material and the recycled material is 100% by mass); and it is more preferable that the mixing ratio of the virgin material be 10 to 50% by mass and the mixing ratio of the recycled material be 50 to 90% by mass. It is even more preferable that the mixing ratio of the virgin material be 20 to 50% by mass and the mixing ratio of the recycled material be 50 to 80% by mass.

In other words, the ratio of the virgin material is preferably 10 to 90% by mass, more preferably 10 to 50% by mass, and further preferably 20 to 50% by mass relative to the total amount of the virgin material and the recycled material taken as 100% by mass.

On the other hand, a favorable molded article of expanded beads can be obtained by increasing the mixing amount of the virgin material according to the availability of the recycled material. In that case, preferably the mixing ratio of the virgin material is 10 to 90% by mass and the mixing ratio of the recycled material is 10 to 90% by mass (provided that the total amount of the virgin material and the recycled material is 100% by mass), and more preferably the mixing ratio of the virgin material is 50 to 90% by mass and the mixing ratio of the recycled material is 50 to 10% by mass.

In other words, the ratio of the virgin material is preferably 10 to 90% by mass, and more preferably 50 to 90% by mass relative to the total amount of the virgin material and the recycled material taken as 100% by mass.

The mixed resin constituting the polypropylene-based resin particles may contain a polymer other than the propylene copolymer (B) or the propylene copolymer (R) provided that the object and effect of the present invention is not adversely affected. Examples of other polymers include the aforementioned thermoplastic resins and thermoplastic elastomers optionally present in the virgin material. The mixed resin may contain the additives usable with the virgin material, or such additives may be added.

When the resin particles are multilayer resin particles having a covering layer on the surface, they may be prepared either by coextrusion, in which multilayer resin particles having a resin particle body (a core layer) composed of a mixed resin and a covering layer covering the resin particle body (the core layer) are prepared, or by covering a previously prepared resin particle body composed of mixed resin with a covering layer. Specifically, in coextrusion, an extrusion apparatus may be used, which is equipped with an extruder for forming a resin particle body (a core layer) composed of a mixed resin, an extruder for forming a covering layer, and a coextrusion die such as a multilayer strand-forming die connected downstream of these extruders. The virgin material and the recycled material to form a mixed resin, and, if necessary, an additive are fed into the extruder for forming a resin particle body (a core layer), and the mixture is melted and kneaded to prepare a molten mixed resin. A resin for forming a covering layer (e.g., a polyolefin resin) and, if necessary, an additive are fed into the extruder for forming a covering layer, and the resin or the mixture is melted and kneaded to prepare a molten resin for forming a covering layer. The molten mixed resin and the molten resin for forming a covering layer are fed into the co-extrusion die and combined, extruded through the extrusion apparatus, and pelletized to achieve a predetermined shape and mass, thereby obtaining resin particles having a multilayer structure with a covering layer on the surface of the resin particle body (the core layer) composed of the mixed resin. Other methods for covering the resin particle body (the core layer) composed of the mixed resin with a covering layer include a method in which the resin particle body (the core layer) composed of a mixed resin and a material for forming the covering layer are put in a mixing apparatus having mixing and heating functions, and heated and mixed. The covering layer may cover part or the entire outer surface of the resin particle body (the core layer). The covering layer preferably covers 50% or more of the resin particle body (the core layer), more preferably 70% or more, and further preferably 80% or more. The resin particle body (the core layer) is preferably in an expanded state, but the covering layer may be either expanded or non-expanded without a cellular structure. From the viewpoint of the improvement in the strength of the resulting molded article, the covering layer is preferably non-expanded.

When the resin particles and expanded beads obtained by the method of present invention are multilayer resin particles and expanded beads having a covering layer on the surface, the aforementioned effect can be achieved by using a mixed material composed of the aforementioned virgin material and recycled material as a raw material for the resin particle body (the core layer) covered by the covering layer and by satisfying the formulas (1) to (3).

The polyolefin resin constituting the covering layer may have a structure similar to that of the covering layer in conventionally known multilayer expanded beads.

The resin constituting the covering layer is preferably a polyolefin resin. Examples of polyolefin resins include a polyethylene-based resin, a polypropylene-based resin, and a polybutene-based resin. The polyolefin resin constituting the covering layer preferably includes at least one selected from the group consisting of a polyethylene-based resin and a polypropylene-based resin, and more preferably a polypropylene-based resin because of good adhesion to the expanded core layer. Examples of polyolefin resins include a propylene-ethylene copolymer, an ethylene-butene copolymer, an ethylene-butene-propylene copolymer, and a propylene homopolymer. Examples of polypropylene-based resins include a propylene-ethylene copolymer, an ethylene-butene-propylene copolymer, and a propylene homopolymer. In particular, the polypropylene-based resin preferably contains at least one selected from the group consisting of a propylene-ethylene copolymer and an ethylene-butene-propylene copolymer, and more preferably contains an ethylene-butene-propylene copolymer.

The resin constituting the covering layer may contain a polymer other than the polyolefin resin described above, provided that the object and effect of the present invention is not adversely affected. Examples of other polymers include the aforementioned thermoplastic resins and thermoplastic elastomers optionally present in the virgin material. Furthermore, the resin constituting the covering layer may contain the additives usable with the virgin material, or such additives may be added.

(Melting point)

When the resin constituting the covering layer is a polypropylene-based resin, it is preferable that the melting point of the polypropylene-based resin be lower than that of the mixed resin constituting the resin particle body (the core layer), from the viewpoint of facilitating fusion bonding properties between expanded beads. Specifically, the melting point is preferably 100°C or more, preferably 110°C or more, more preferably 115°C or more, and further preferably 120°C or more from the viewpoint of the improvement in the moldability of the molded article of expanded beads under lower molding pressure. The melting point is preferably 150°C or less, preferably 145°C or less, more preferably 140°C or less, and further preferably 138°C or less from the viewpoint of facilitating fusion bonding between expanded beads. The melting point of the polypropylene-based resin constituting the covering layer is measured in the same manner as the measurement of the melting point MP1.

(Crystallization temperature)

When the resin constituting the covering layer is a polypropylene-based resin, the crystallization temperature is preferably 90°C or more, more preferably 93°C or more, and further preferably 95°C or more to obtain expanded beads having good moldability easily in a stable manner. The crystallization temperature is preferably 130°C or less, more preferably 125°C or less, further preferably 120°C or less, even more preferably 115°C or less, still more preferably 110°C or less, and yet more preferably 105°C or less. The crystallization temperature of the polypropylene-based resin constituting the covering layer is measured in the same manner as the measurement of the crystallization temperature CP1.

(Heat of fusion)

When the resin constituting the covering layer is a polypropylene-based resin, the heat of fusion is preferably 30 J/g or more, more preferably 40 J/g or more, further preferably 50 J/g or more, even more preferably 55 J/g or more, and still more preferably 57 J/g or more, and preferably 100 J/g or less, more preferably 90 J/g or less, further preferably 80 J/g or less, even more preferably 70 J/g or less, and still more preferably 65 J/g or less from the viewpoint of the improvement in the moldability of the molded article of expanded beads under lower molding pressure. The heat of fusion of the polypropylene-based resin constituting the covering layer is measured in the same manner as the measurement of the heat of fusion of the virgin material.

(Melt flow rate)

When the resin constituting the covering layer is a polypropylene-based resin, the melt flow rate is preferably 1 g/10 minutes or more, more preferably 3 g/10 minutes or more, and further preferably 4 g/10 minutes or more, and preferably 15 g/10 minutes or less, more preferably 10 g/10 minutes or less, and further preferably 8 g/10 minutes or less to obtain expanded beads having good moldability easily in a stable manner. The melt flow rate of the polypropylene-based resin constituting the covering layer is measured in the same manner as the measurement of the melt flow rate MFR1.

(Mass ratio between resin particle body (core layer) and covering layer)

The mass ratio between the resin particle body (the core layer) and the covering layer (resin particle body (core layer) : covering layer) is preferably 99.5:0.5 to 80:20, more preferably 99:1 to 90:10, and further preferably 98:2 to 95:5 from the viewpoint of achieving both the improvement in fusion bonding properties between expanded beads and reduction of environmental impact.

The external shape of the resin particles is not particularly limited as long as it falls within a range that allows the intended purpose of the present invention to be achieved, but is preferably columnar. When the external shape of the resin particles is columnar, the particle size of the resin particles (the length in the extrusion direction) is preferably 0.2 to 4 mm, and more preferably 0.5 to 3 mm. The ratio (length/diameter ratio) of the length of the resin particles in the extrusion direction to the length in the direction perpendicular to the extrusion direction of the resin particles (the diameter of the resin particle) is preferably 0.5 to 5.0, and more preferably 1.0 to 3.0.

The average mass of the resin particles is preferably adjusted to 0.1 to 20 mg, more preferably 0.2 to 10 mg, further preferably 0.3 to 5 mg, and even more preferably 0.4 to 2 mg.

<Expansion of polypropylene-based resin particles>

The resin particles obtained as described above are impregnated with a blowing agent, and the polypropylene-based resin particles thus impregnated are expanded to obtain polypropylene-based resin expanded beads.

Specifically, a dispersion medium and polypropylene-based resin particles are placed in a sealable container capable of withstanding heat and pressure, such as an autoclave. The polypropylene-based resin particles are then dispersed in the dispersion medium by a stirrer, after which a blowing agent is added to the container. By maintaining the system at a predetermined temperature and pressure, the polypropylene-based resin particles can be impregnated with the blowing agent.

The dispersion medium is not particularly limited as long as it does not dissolve the polypropylene-based resin particles. Examples include water and alcohol such as ethylene glycol, glycerol, methanol and ethanol, with water being particularly preferred.

It is preferable to add a dispersant to the dispersion medium in order to more reliably prevent agglomeration of polypropylene-based resin particles. Examples of dispersants include an organic dispersant such as polyvinyl alcohol, polyvinylpyrrolidone, and methylcellulose; and a poorly soluble inorganic salt such as aluminum oxide, zinc oxide, kaolin, mica, magnesium phosphate, and tricalcium phosphate. The dispersants may be used alone or in combination of two or more. Among them, the dispersant is preferably a poorly soluble inorganic salt, and more preferably kaolin from the viewpoint of ease of handling. When the dispersant is added, it is preferable to add about 0.001 to 5 parts by mass of the dispersant based on 100 parts by mass of the polypropylene-based resin particles.

When the dispersant is added, it is preferable to add an inorganic salt such as aluminum sulfate as a dispersant aid. When the dispersant aid is added, it is preferable to add about 0.001 to 1 part by mass of the dispersant aid based on 100 parts by mass of the polypropylene-based resin particles.

A surfactant may also be added to the dispersion medium. Examples of surfactants include sodium alkylbenzene sulfonate such as sodium dodecylbenzenesulfonate, sodium alkyl sulfonate, sodium oleate, sodium lauryl sulfate, sodium polyoxyethylene alkyl ether phosphate, sodium polyoxyethylene alkyl ether sulfate, and other anionic surfactants and nonionic surfactants commonly used in suspension polymerization. When the surfactant is added, it is preferable to add about 0.001 to 1 part by mass of the surfactant based on 100 parts by mass of the polypropylene-based resin particles.

The blowing agent is not particularly limited as long as it can expand polypropylene-based resin particles. Examples of blowing agents include inorganic physical blowing agents such as air, nitrogen, carbon dioxide, argon, helium, oxygen, and neon; and organic physical blowing agents including aliphatic hydrocarbons such as propane, n-butane, isobutane, n-pentane, isopentane, and n-hexane; alicyclic hydrocarbons such as cyclohexane and cyclopentane; halogenated hydrocarbons such as ethyl chloride, 2,3,3,3-tetrafluoropropene, trans-1,3,3,3-tetrafluoropropene, and trans-1-chloro-3,3,3-trifluoropropene; and dialkyl ethers such as dimethyl ether, diethyl ether, and methyl ethyl ether. Among them, the blowing agent is preferably an inorganic physical blowing agent, more preferably at least one selected from the group consisting of nitrogen, air and carbon dioxide, and further preferably carbon dioxide from the viewpoint of low environmental impact and economy. The blowing agents may be used alone or in combination of two or more.

The amount of addition of the blowing agent is determined in consideration of the bulk density of the desired polypropylene-based resin expanded beads, the type of the polypropylene-based resin, the type of the blowing agent, and the like. For example, when an inorganic physical blowing agent is used, the amount of addition is preferably 0.1 to 30 parts by mass, and more preferably 0.5 to 15 parts by mass based on 100 parts by mass of the polypropylene-based resin particles.

The heating temperature when impregnating the particles with the blowing agent is preferably 100°C to 180°C, and more preferably 130 to 175°C. The holding time at the heating temperature is preferably 1 to 100 minutes, and more preferably 10 to 60 minutes.

Then, the polypropylene-based resin particles impregnated with the blowing agent, together with the dispersion medium, are discharged from the sealable container into an atmosphere at a pressure lower than that in the container, thereby expanding the polypropylene-based resin particles to obtain polypropylene-based resin expanded beads.

When expanding polypropylene-based resin particles by discharging them from the sealable container into an atmosphere at a pressure lower than that in the container, the temperature during expansion is usually preferably 110 to 170°C. The pressure in the sealable container is preferably 0.5 MPa (G) to 5 MPa (G). The pressure indicated with (G) refers to gauge pressure, that is, a value relative to atmospheric pressure.

The polypropylene-based resin expanded beads obtained as described above are subjected to pressurization with air or the like to increase their internal cell pressure, and then heated with steam or the like to cause secondary expansion, thereby obtaining expanded beads with higher expansion ratio (i.e., lower bulk density).

[Polypropylene-based resin expanded beads]

<Bulk density>

The polypropylene-based resin expanded beads have a bulk density of preferably 10 kg/m$^3$ or more, more preferably 15 kg/m$^3$ or more, and further preferably 20 kg/m$^3$ or more from the viewpoint of the improvement in the strength of the molded article, and preferably 200 kg/m$^3$ or less, more preferably 100 kg/m$^3$ or less, further preferably 60 kg/m$^3$ or less, and even more preferably 50 kg/m$^3$ or less from the viewpoint of reducing the weight of the molded article of expanded beads.

The bulk density of the expanded beads is determined as follows. First, mass W1 [g] of expanded beads is filled into a graduated cylinder, and the cylinder is lightly tapped against a flat surface several times to settle the filling height of the expanded beads. Next, the volume V1 [L] of the expanded beads is read from the graduations of the graduated cylinder. The bulk density of the expanded beads is determined by dividing the mass W1 of the expanded beads by the volume V1 (W1/V1) and converting the unit to [kg/m$^3$].

<High-temperature peak>

It is preferable that the polypropylene-based resin expanded beads have a crystal structure exhibiting, in a DSC curve obtained by heating the expanded beads from 23°C to 200°C at a heating rate of 10°C/minute, a melting peak due to melting of crystals inherent to the polypropylene-based resin (i.e., a resin-specific peak) and one or more melting peaks on the higher-temperature side thereof (i.e., high-temperature peaks). The DSC curve is obtained by performing differential scanning calorimetry (DSC) in accordance with JIS K 7122:2012, using 1 to 3 mg of the expanded beads as a specimen. The resin-specific peak refers to a melting peak resulting from the melting of crystals inherent to the polypropylene-based resin constituting the expanded beads, and is regarded as an endothermic peak that appears due to absorption of heat during the melting of crystals normally present in polypropylene-based resin. On the other hand, the melting peak on the higher-temperature side (i.e., high-temperature peak) refers to a melting peak that appears at a temperature higher than the aforementioned resin-specific peak in the DSC curve. The appearance of the higher-temperature peak suggests the presence of secondary crystals in the resin. It is preferable that, in the DSC curve obtained by heating the expanded beads from 23°C to 200°C at a heating rate of 10°C/minute (the first heating), cooling them from 200°C to 23°C at a cooling rate of 10°C/minute, and then heating them again from 23°C to 200°C at a heating rate of 10°C/minute (the second heating), only the melting peak associated with the melting of crystals inherent to the polypropylene-based resin constituting the expanded beads appears. The resin-specific peak and the high-temperature peak can be distinguished as explained above.

The high-temperature peak can be adjusted, for example, by controlling the heating rate in the sealable container and holding the temperature in the container for a predetermined time, after dispersing resin particles in the dispersion medium and/or at the time of or after impregnating the resin particles with the blowing agent. More specifically, the first holding step is performed, in which the temperature in the sealable container is maintained at (the melting point of the resin particles -20°C) or higher and less than (the end temperature of melting of the resin particles) for about 10 to 60 minutes. Subsequently, the second holding step may be performed, in which the temperature in the sealable container is maintained from (the melting point of the resin particles -15°C) to less than (the end temperature of melting of polypropylene-based resin) for about 10 to 60 minutes.

(Heat of fusion of high-temperature peak)

The heat of fusion of the high-temperature peak of the polypropylene-based resin expanded beads is preferably 8 to 50 J/g, more preferably 10 to 40 J/g, and further preferably 12 to 30 J/g from the viewpoint of the improvement in the moldability of the expanded beads and to obtain a molded article with well-balanced cushioning properties and rigidity.

Fig. 1 shows an example of a DSC curve (a DSC curve of the first heating) obtained when the polypropylene-based resin expanded beads are heated from 23°C to 200°C at a heating rate of 10°C/minute, in which a resin-specific peak $P_1$ and a high-temperature peak $P_2$ appearing on the higher-temperature side of the resin-specific peak $P_1$ are observed. When the high-temperature peak $P_2$ as shown in Fig. 1 appears, the heat of fusion may be determined as follows. First, a point $\alpha$ on the DSC curve at 80°C is defined, and a point $\beta$ on the DSC curve corresponding to the end temperature of melting T is defined. Then, a straight line L1 connecting these two points is drawn. Next, from a point y on the DSC curve corresponding to the valley between the resin-specific peak and the high-temperature peak, a straight line L2 parallel to the vertical axis of the graph is drawn, and the point of intersection with the straight line L1 is defined as $\delta$. The area (2) enclosed by the curve corresponding to the high-temperature peak portion of the DSC curve, the line segment ($\delta$-$\beta$), and the line segment L2 is defined as the area of the high-temperature peak, and the heat of fusion of the high-temperature peak can be determined from this area.

[Molded article of polypropylene-based resin expanded beads]

A molded article of polypropylene-based resin expanded beads can be obtained by in-mold molding of the polypropylene-based resin expanded beads obtained by the method of the present invention.

In-mold molding can be performed by filling a mold with expanded beads and molding them by heating with a heating medium such as steam. Specifically, after filling the mold with expanded beads, a heating medium such as steam is introduced into the mold to heat and expand the particles, while fusing them together, thereby obtaining a molded article of the expanded beads conforming to the shape of the mold cavity. In the present invention, in-mold molding can also be performed by pressurization molding (for example, JP S51-22951 A), in which the expanded beads are first subjected to pressurization treatment with a pressurized gas such as air to increase the internal pressure of the cells and adjust the pressure within the expanded beads to 0.01 to 0.3 MPa higher than atmospheric pressure; after this adjustment, the expanded beads are filled into a mold under atmospheric or reduced pressure, and then a heating medium such as steam is supplied into the mold to heat and fuse the particles together. It is also possible to perform molding by compression filling molding (e.g., JP H4-46217 A), in which expanded beads pressurized to a pressure higher than that of the mold are charged into a mold that has been pressurized above atmospheric pressure with a compressed gas, and then a heating medium such as steam is supplied into the cavity to heat and fuse the particles together. The molding can also be performed by a molding method by filling at atmospheric pressure (e.g., JP H6-49795 A), in which expanded beads having high secondary expandability obtained under special conditions are charged into a cavity of a mold under atmospheric pressure or reduced pressure, and then a heating medium such as steam is supplied to heat and fuse the particles together, or by a combined method of the above (e.g., JP H6-22919 A).

According to the present invention, a favorable molded article with good fusion bonding properties, surface properties, and dimensional stability can be obtained even when the lowest molding pressure (steam pressure) is reduced to, for example, 0.3 MPa(G) or less. The term "good fusion bonding properties" generally means that a molded article having a fusion bonding ratio of 70% or more, and preferably 80% or more can be obtained. The term "good surface properties" means that a molded article has a smooth surface without noticeable gaps or voids. In the present invention, a molded article of expanded beads having the aforementioned properties and good dimensional stability can be obtained. It is preferable that the lowest molding steam pressure be 0.28 MPa (G) or less from the viewpoint of low pressure moldability.

<Density>

The molded article of the polypropylene-based resin expanded beads has a density of preferably 10 kg/m$^3$ or more, more preferably 15 kg/m$^3$ or more, and further preferably 20 kg/m$^3$ or more, and preferably 200 kg/m$^3$ or less, more preferably 100 kg/m$^3$ or less, further preferably 80 kg/m$^3$ or less, and even more preferably 60 kg/m$^3$ or less from the viewpoint of ease of obtaining a molded article having well-balanced strength and lightweight properties.

The density of the molded article of the polypropylene-based resin expanded beads is calculated by dividing the mass of the molded article of expanded beads by the volume determined from the external dimension of the molded article, and converting the unit.

[Examples]

Hereinafter, the present invention will be described in more detail with reference to Examples, but the present invention is not limited thereto.

The resin materials, resin particles, expanded beads and molded articles of the expanded beads of Examples and Comparative Examples were subjected to measurements and evaluation as follows. For the measurement of physical properties of the resin particles, when the resin particles have a covering layer, the resin particles were prepared under the same conditions as in the corresponding Examples and Comparative Examples, using only the extruder for forming a resin particle body described below, except that no covering layer was formed on the surface, and the following measurements were performed using the resin particles without a covering layer. Physical properties of the expanded beads were measured using expanded beads conditioned by allowing them to stand at 50% RH, 23°C, and 1 atm for 24 hours. Physical properties of the molded article of the expanded beads were measured and evaluated using a molded article conditioned by allowing it to stand at 50% RH, 80°C, and 1 atm for 12 hours.

[Measurement method]

<Resin material (virgin material and recycled material) and resin particles>

(Melting point)

The melting point of the resin material and resin particles was measured in accordance with JIS K 7121:2012 by heat-flux differential scanning calorimetry. High Sensitivity Differential Scanning Calorimeter "EXSTAR DSC7020" (manufactured by Hitachi High-Tech Science) was used as a measurement apparatus. For conditioning of the specimen, the procedure "(2) The case of measuring the melting temperature after carrying out a certain heat treatment" was employed. About 2 mg of the polypropylene-based resin was taken as a specimen. The specimen was heated from 23°C to 200°C at a heating rate of 10°C/minute under a nitrogen flow of 30 mL/minute, then held at that temperature for 10 minutes, followed by cooling to 23°C at a cooling rate of 10°C/minute. Thereafter, the specimen was again heated to 200°C at a heating rate of 10°C/minute to obtain a DSC curve (the DSC curve of the second heating). The peak temperature of the melting peak in the DSC curve was determined, and the value was defined as the melting point.

When multiple melting peaks are observed in the DSC curve, the peak temperature of the melting peak with the greatest area is taken as the melting point. At this point, a comparison of the areas of the individual melting peaks (i.e., the heat of fusion), separated at the valley temperatures of the DSC curve between the respective peak temperatures, allows determination of the melting peak with the largest area. The valley temperatures of the DSC curve correspond to the temperatures at which the ordinate of the derivative curve of the DSC (DDSC) is zero, and can thus be determined from the DSC derivative curve.

(Melt flow rate)

The melt flow rate of the resin material and resin particles was measured in accordance with JIS K 7210-1:2014 at 230°C under a load of 2.16 kg.

(Crystallization temperature)

The crystallization temperature of the resin material and resin particles was measured in accordance with JIS K 7121:2012 using a heat-flux differential scanning calorimeter. When multiple crystallization peaks were observed in the DSC curve, the peak temperature of the crystallization peak with the greatest area was taken as the crystallization temperature.

(Heat of fusion)

The heat of fusion of the resin material and resin particles was measured in accordance with JIS K 7122:2012 by heat-flux differential scanning calorimetry, as described below.

High Sensitivity Differential Scanning Calorimeter "EXSTAR DSC7020" (manufactured by Hitachi High-Tech Science) was used as a measurement apparatus. For conditioning of the specimen, the procedure "(2) The case of measuring the melting temperature after carrying out a certain heat treatment" was employed. About 2 mg of the polypropylene-based resin was taken as a specimen. The specimen was heated from 23°C to 200°C at a heating rate of 10°C/minute under a nitrogen flow of 30 mL/minute, then held at that temperature for 10 minutes, followed by cooling to 23°C at a cooling rate of 10°C/minute. Thereafter, the specimen was again heated to 200°C at a heating rate of 10°C/minute to obtain a DSC curve (the DSC curve of the second heating).

A point $\alpha$ on the DSC curve of the second heating at 80°C was defined, and a point $\beta$ on the DSC curve corresponding to the end temperature of melting T was defined. The area enclosed by the DSC curve section between the point $\alpha$ and the point $\beta$ and the line segment ($\alpha$-$\beta$) was measured, and the heat of fusion of the polypropylene-based resin was calculated from this area.

(Flexural modulus)

The flexural modulus of the resin material was measured in accordance with JIS K 7171:2016. First, a sheet of polypropylene-based resin having a thickness of 4 mm was prepared by heat pressing at 230°C, and a standard specimen of 80 mm in length, 10 mm in width, and 4 mm in thickness was cut out from the sheet. Using this specimen, a bending test was conducted with an indenter radius R1 of 5 mm, a support radius R2 of 5 mm, a span length of 64 mm, and a test speed of 2 mm/minute. The flexural modulus of the polypropylene-based resin was determined from the results of the bending test.

(Ash content)

The ash content of the recycled material was measured in accordance with JIS K 6226-2:2003. A thermogravimetric analyzer TGA701 manufactured by LECO JAPAN Corporation was used as the measurement apparatus. Specifically, about 5 g of the recycled material serving as the measurement sample was taken, its mass was measured, and the sample was placed in a crucible. The heating furnace was purged with a nitrogen flow, and under the nitrogen atmosphere, the temperature in the heating furnace was raised from room temperature to 105°C at a heating rate of 10°C/minute. The sample was held at 105°C until its mass reached equilibrium, then heated from 105°C to 550°C at a heating rate of 10°C/minute, and maintained at 550°C until the mass again reached equilibrium. Subsequently, the furnace atmosphere was switched from nitrogen to air, and the sample was heated from 550°C to 950°C at a heating rate of 10°C/minute, followed by holding at 950°C for 10 minutes. Afterward, the mass M1 of the combustion residue was determined, and the sample was cooled to room temperature. The ash content (ppm by mass) of the recycled material was determined by dividing the mass M1 of the combustion residue by the mass of the measurement sample placed in the crucible, multiplying the resulting value (mass%) by 100, and then further multiplying by 10,000. The above procedure was performed twice, and the arithmetic mean value was taken as the ash content of the recycled material.

(Carbon black content)

The content of carbon black in the recycled material was measured in accordance with JIS K 6226-2:2003. The measurement was carried out using a simultaneous thermogravimetry-differential thermal analyzer TG/DTA6200 manufactured by Seiko Instruments Inc. Specifically, about 10 mg of the recycled material serving as the measurement sample was taken, its mass was measured, and the sample was placed in a platinum pan. The heating furnace was purged with a nitrogen flow, and under the nitrogen atmosphere, the temperature in the heating furnace was raised from room temperature to 500°C at a heating rate of 10°C/minute, and the sample was held at 500°C for 5 minutes. The measurement atmosphere was switched to air, and the sample was heated from 500°C to 1,000°C at a heating rate of 10°C/minute. The mass at the equilibrium portion at 500°C holding was defined as M1, and the mass at the equilibrium portion at temperatures above 700°C was defined as M2. The carbon black content in the recycled material was determined by subtracting the mass M2 from the mass M1 to obtain the mass M3, dividing M3 by the mass of the measurement sample, and multiplying the resulting value by 100. The above procedure was performed twice, and the arithmetic mean value was taken as the carbon black content of the recycled material.

<Expanded beads>

(Heat of fusion of high-temperature peak)

The heat of fusion of the high-temperature peak of expanded beads was determined in accordance with JIS K 7122:2012 by heat-flux differential scanning calorimetry, as described below.

Specifically, about 2 mg of the expanded beads was taken as a specimen, and the specimen was heated from 23°C to 200°C at a heating rate of 10°C/minute using a differential scanning calorimeter "EXSTAR DSC7020" (manufactured by Hitachi High-Tech Science), thereby obtaining a DSC curve having two or more melting peaks (a DSC curve of the first heating). The measurement was performed under a condition of a nitrogen inflow of 30 mL/minute. In the DSC curve obtained, the peak inherent to the polypropylene-based resin constituting the expanded beads was defined as $P_1$, and the peak appearing on the higher-temperature side thereof was defined as $P_2$.

A straight line $\alpha$ - $\beta$ connecting a point $\alpha$ on the DSC curve corresponding to 80°C and a point $\beta$ on the DSC curve corresponding to the end temperature of melting T of the specimen was drawn. The aforementioned end temperature of melting refers to the high temperature end of the high-temperature peak $P_2$, that is, the point where the high-temperature peak intersects with the high-temperature side baseline. Next, from a point $\gamma$ on the DSC curve corresponding to the valley between the specific peak $P_1$ and the high-temperature peak $P_2$, a straight line parallel to the vertical axis of the graph is drawn, and the point of intersection with the straight line is defined as $\delta$.

The area enclosed by the curve corresponding to the high-temperature peak $P_2$ portion of the DSC curve, the line segment ($\delta$-$\beta$), and the line segment ($\gamma$-$\delta$) was determined, and the heat of fusion of the high-temperature peak was calculated from this area. The heat of fusion of the high-temperature peak of three different specimens was measured, and the arithmetic mean value of the resulting values was defined as the heat of fusion of the high-temperature peak of the expanded beads.

(Bulk density)

The bulk density of the expanded beads was determined as follows. First, mass W1 [g] of expanded beads was filled into a graduated cylinder, and the cylinder was lightly tapped against a flat surface several times to settle the filling height of the expanded beads. Next, the volume V1 [L] of the expanded beads was read from the graduations of the graduated cylinder. The bulk density of the expanded beads was determined by dividing the mass W1 [g] of the expanded beads by the volume V1 (W1/V1) and converting the unit to [kg/m$^3$].

<Molded article of expanded beads>

(Density of molded article)

Densities of three specimens were calculated by dividing the mass of the molded article of expanded beads by the volume determined from the dimension of the molded article, and their arithmetic mean was taken as the density of the molded article of expanded beads. The density was measured using a molded article of expanded beads obtained by in-mold molding at the lowest molding pressure within the moldable range described below.

[Evaluation method]

<Toolbox-shaped molded article of expanded beads>

(Lowest molding pressure for favorable molded article)

Molded articles of expanded beads were prepared by increasing the molding pressure (steam pressure) in increments of 0.02 MPa (G) within the range of 0.20 to 0.40 MPa (G) in the <Preparation of toolbox-shaped molded article of expanded beads> below. The lowest molding pressure at which a molded article of expanded beads rated "A" for both appearance and dimensional stability was obtained was determined.

(Appearance)

In the <Preparation of toolbox-shaped molded article of expanded beads> below, after removal from the mold, the molded article was aged or conditioned by the following method.

<<Non-aging>>

After removal from the mold, the molded article was conditioned by allowing it to stand under conditions of 23°C, 50% RH, and 1 atom for 24 hours.

<<3-hour aging>>

After removal from the mold, the molded article was aged by allowing it to stand in an oven at 80°C for 3 hours. Subsequently, the molded article was conditioned by allowing it to stand under conditions of 23°C, 50%RH, and 1 atom for 24 hours.

<<24-hour aging>>

After removal from the mold, the molded article was aged by allowing it to stand in an oven at 80°C for 24 hours. Subsequently, the molded article was conditioned by allowing it to stand under conditions of 23°C, 50%RH, and 1 atom for 24 hours.

The molded articles aged or conditioned by the aforementioned method were evaluated based on the following criteria.

    A: Surface of the molded article has minimal interparticle gaps and no prominent surface roughness.
    B: Surface of the molded article has prominent surface roughness due to interparticle gaps.

(Dimensional stability)

In the same manner as in the aforementioned (Appearance), in the <Preparation of toolbox-shaped molded article of expanded beads> described later, a toolbox-shaped molded article measuring 80 cm in length, 90 cm in width, and 15 cm in height and having partition portions with protrusions and recesses, which was aged or conditioned after removal from a mold in which such a molded article can be molded, was evaluated based on the following criteria.

    A: The toolbox-shaped molded article exhibits no significant dimensional change and shows almost no inward deformation of the inner walls.

B: The toolbox-shaped molded article exhibits slight dimensional change, with changes not exceeding 5%.
C: The toolbox-shaped molded article exhibits significant dimensional change (exceeding 5%) and shows inward deformation of the inner walls that does not recover.

[Raw material]

The resins used in Examples and Comparative Examples are shown in Table 1 and Table 2. Resin 1 is an ethylene-propylene copolymer (ethylene component content: 3.1% by mass), and Resin 2 is an ethylene-butene-propylene copolymer (ethylene component content: 3.8% by mass, butene component content: 3.8% by mass; two melting peaks were observed in the DSC curve, and the peak temperature of the melting peak having the largest area was 125°C). Recycled materials 1 to 7 are ethylene-propylene copolymers.

[Table 1]

Table 1

| | Melting point | MFR | Crystallization temperature | Heat of fusion | Flexural modulus | Comonomer | | Carbon black content | Ash content |
|---|---|---|---|---|---|---|---|---|---|
| | | | | | | Ethylene content | Butene content | | |
| | °C | g/10 minutes | °C | J/g | MPa | % by mass | % by mass | % by mass | ppm by mass |
| Resin 1 | 143 | 7.2 | 100 | 70 | 970 | 3.1 | 0 | - | - |
| Resin 2 | 125 (136) | 5.6 | 102 | 60 | 700 | 3.8 | 3.8 | - | - |

[Table 2]

Table 2

| | Melting point | MFR | Crystallization temperature | Heat of fusion | Flexural modulus | Carbon black content | Ash content |
|---|---|---|---|---|---|---|---|
| | °C | g/10 minutes | °C | J/g | MPa | % by mass | ppm by mass |
| Resin 1 | 143 | 7.2 | 100 | 70 | 970 | - | - |
| Resin 2 | 125 (136) | 5.6 | 102 | 60 | 700 | - | - |
| Recycled material 1 | 146 | 10 | 108 | 73 | 1070 | 1.5 | 1580 |
| Recycled material 2 | 146 | 10 | 111 | 77 | 980 | 0.0 | 500 |
| Recycled material 3 | 140 | 9.0 | 100 | 58 | 580 | 2.6 | 500 |
| Recycled material 4 | 143 | 10 | 101 | 61 | 970 | 0.0 | 50 |
| Recycled material 5 | 147 | 20 | 111 | 77 | 980 | 0.0 | 500 |
| Recycled material 6 | 148 | 12 | 112 | 79 | 1000 | 2.0 | 5150 |
| Recycled material 7 | 155 | 13 | 117 | 72 | 1050 | 2.6 | 500 |

Examples 1 to 4, Comparative Examples 2 to 6

<Preparation of resin particles>

A manufacturing apparatus was prepared, comprising an extruder for forming resin particle body (a core layer) having an inner diameter of 50 mm, a multilayer strand-forming die attached downstream of the extruder for forming resin particle body (a core layer), and an extruder for forming a covering layer having an inner diameter of 30 mm. In the manufacturing apparatus, the downstream of the extruder for forming a covering layer and the multilayer strand-forming die are connected. Furthermore, the apparatus allows the molten resins forming the respective layers to be laminated within the die and co-extruded simultaneously.

The virgin material and the recycled material shown in Table 3 or Table 4 were used as the polypropylene-based resin for forming the resin particle body (core layer) at a mixing ratio shown in Table 3 or Table 4. In addition to these materials, carbon black (furnace black) serving as a colorant and zinc borate (product name "Firebrake ZB" manufactured by Borax) serving as a foam stabilizer were fed into the extruder for forming resin particle body (core layer) at a mixing ratio shown in Table 3 or Table 4, and the mixture was melted and kneaded to prepare a melt-kneaded resin blend. The polypropylene-based resin shown in Table 3 or Table 4 serving as a polypropylene-based resin for forming a covering layer was fed into the extruder for forming a covering layer, and the mixture was melted and kneaded to prepare a melt-kneaded resin for forming a covering layer. The melt-kneaded resin blend and the melt-kneaded resin for forming a covering layer were fed into the multilayer strand-forming die and combined, and a multilayer strand was extruded, which had a two-layer structure of the resin particle body (core layer) and the covering layer and in which the mass ratio of the covering layer was as shown in Table 3 or Table 4. The extruded strand was water-cooled and pelletized by a pelletizer to obtain columnar resin particles having a multilayer structure, an average mass of 1.0 mg per particle, and a length/diameter ratio of 2.0.

<Preparation of expanded beads>

100 kg of the resulting resin particles were introduced into a 400 L sealable container along with 230 L of water, which served as the dispersion medium. 0.3 parts by mass of kaolin serving as an inorganic dispersant, 0.004 parts by mass (in terms of the active ingredient) of a surfactant (sodium alkylbenzene sulfonate), and 0.01 part by mass of aluminum sulfate were added to the sealable container based on 100 parts by mass of the resin particles. Subsequently, carbon dioxide was charged into the sealable container as a blowing agent under pressure, and the container was pressurized to 1 MPa below the gauge pressure shown in Table 3 or Table 4. Then the content of the sealable container was heated at a heating rate of 2°C/minute to reach the temperature shown in Table 3 or Table 4 with stirring, and carbon dioxide was introduced thereinto again and the sealable container was pressurized to the gauge pressure shown in Table 3 or Table 4, and held at the same temperature for 15 minutes. By this adjustment, the endothermic curve of the resulting expanded beads obtained in the DSC measurement was adjusted so that a high-temperature peak appeared. Then, the contents (resin particles and water) of the sealable container were released under atmospheric pressure, thereby obtaining one-stage expanded beads having the bulk density shown in Table 3 or Table 4.

The resulting one-stage expanded beads were aged by allowing them to stand under conditions of a temperature of 23°C, a relative humidity of 50%, and 1 atm for 24 hours. The aged expanded beads were placed in a sealable, pressure-resistant container and pressurized by increasing the internal pressure from atmospheric pressure. The expanded beads were kept under pressure for a predetermined time, thereby impregnating the cells of the expanded beads with air. Then the one-stage expanded beads were removed from the sealable container, and these particles had an internal cell pressure of 0.5 MPa (G). Subsequently, the one-stage expanded beads were fed to the two-stage expansion apparatus. The two-stage expanded beads were obtained by expanding the one-stage expanded beads by supplying steam to the apparatus.

The measurement results of the resulting expanded beads are shown in Table 3 or Table 4. The mass ratio between the resin particle body (the core layer) and the covering layer of the expanded beads was the same as the mass ratio between the resin particle body (the core layer) and the covering layer of the resin particles.

<Preparation of toolbox-shaped molded article of expanded beads>

After aging the two-stage expanded beads obtained as described above by allowing them to stand under conditions of a temperature of 23°C, a relative humidity of 50%, and 1 atm for 24 hours, the expanded beads were placed in a sealable, pressure-resistant container and pressurized by using compressed air, thereby impregnating them with air and imparting an internal cell pressure (intercell pressure) shown in Table 3 or Table 4. Next, expanded beads to which internal pressure had been imparted were charged into a mold having a cavity capable of molding a toolbox-shaped molded article of expanded beads having a cracking amount as shown in Table 3 or 4, measuring 80 cm in length, 90 cm in width, and 15 cm in height, and having multiple protrusions and recesses, and the expanded beads were heated by the following method. The heating method was carried out by supplying steam to the mold while keeping the drain valves provided on both sides thereof open, thereby performing preheating (exhaust step). Thereafter, the mold was heated by supplying steam from one side, and was further heated by supplying steam from the other side. Subsequently, the mold was heated by supplying steam from both sides at a predetermined molding steam pressure. After completion of the heating, the pressure was released, and the mold was water-cooled until the surface pressure due to the expanding force of the molded article of expanded beads reached 0.05 MPa (G). The mold was then opened, and the molded article of expanded beads was taken out. The measurement and evaluation results of the resulting molded article of expanded beads are shown in Table 3 or Table 4.

When a flat plate-shaped molded article of expanded beads measuring 300 mm in length, 250 mm in width and 60 mm in height was produced in the same manner as described above using the two-stage expanded beads obtained as described above, in Examples 1 to 4, a favorable molded article having a density of 33 kg/m$^3$ was obtained at the lowest molding pressure of 0.28 MPa (G), and molding at low molding pressure was achieved. In addition, in the evaluation of the lowest molding pressure at which a favorable molded article of expanded beads could be obtained, the molding pressure range at which a molded article of expanded beads passed all evaluations for fusion bonding properties, surface quality, and dimensional stability was 0.06 MPa (G). Thus, the moldable range was wide, and the molding properties were excellent.

Comparative Example 1

Expanded beads and a molded article of the expanded beads were prepared in the same manner as in Example 1 except for obtaining resin particles by preparing a manufacturing apparatus comprising an extruder having an inner diameter of 50 mm and a strand-forming die attached downstream of the extruder in <Preparation of resin particles>, using the virgin material shown in Table 4 as a polypropylene-based resin for forming resin particles, feeding carbon black (furnace black) serving as a colorant and zinc borate (product name "Firebrake ZB" manufactured by Borax) serving as a foam stabilizer into the extruder at the mixing ratio shown in Table 4, respectively, melting and kneading the mixture and extruding. The measurement and evaluation results of the resulting expanded beads and molded articles of the expanded beads are shown in Table 4.

[Table 3]

Table 3

| | | | | Example | | | |
|---|---|---|---|---|---|---|---|
| | | | | 1 | 2 | 3 | 4 |
| Mixed resin material (resin particle body) | Virgin material | Name | - | Resin 1 | Resin 1 | Resin 1 | Resin 1 |
| | | Melting point MP1 | °C | 143 | 143 | 143 | 143 |
| | | Melt flow rate MFR1 | g/10 minutes | 7.2 | 7.2 | 7.2 | 7.2 |
| | | Crystallization temperature CP1 | °C | 100 | 100 | 100 | 100 |
| | | Heat of fusion | J/g | 70 | 70 | 70 | 70 |
| | | Flexural modulus F1 | MPa | 970 | 970 | 970 | 970 |
| | | Content in mixed resin | % by mass | 70 | 85 | 10 | 70 |
| | Recycled material | Name | | Recycled material 1 | Recycled material 1 | Recycled material 1 | Recycled material 2 |
| | | Melting point MP2 | °C | 146 | 146 | 146 | 146 |
| | | Melt flow rate MFR2 | g/10 minutes | 10 | 10 | 10 | 10 |
| | | Crystallization temperature CP2 | °C | 108 | 108 | 108 | 111 |
| | | Heat of fusion | J/g | 73 | 73 | 73 | 77 |
| | | Flexural modulus F2 | MPa | 1070 | 1070 | 1070 | 980 |
| | | Ash content | ppm bv mass | 1580 | 1580 | 1580 | 500 |
| | | Content in mixed resin | % by mass | 30 | 15 | 90 | 30 |
| | Difference (MP2-MP1) | | °C | 3.5 | 3.5 | 3.5 | 3.5 |
| | Difference (MFR2-MFR1) | | g/10 minutes | 3.1 | 3.1 | 3.1 | 2.8 |
| | Difference (CP2-CP1) | | °C | 8.2 | 8.2 | 8.2 | 10.8 |
| | Ratio (F1/F2) | | - | 0.9 | 0.9 | 0.9 | 1.0 |
| | Additive | Carbon black | % by mass | 2.6 | 2.6 | 2.6 | 0 |
| | | Zinc borate | ppm by mass | 500 | 500 | 500 | 500 |

(continued)

| | | | | Example | | | |
|---|---|---|---|---|---|---|---|
| | | | | 1 | 2 | 3 | 4 |
| Resin particle | Covering layer | Name | - | Resin 2 | Resin 2 | Resin 2 | Resin 2 |
| | Mass ratio (resin particle body (core layer): covering layer) | | - | 97:3 | 97:3 | 97:3 | 97:3 |
| | Melting point | | °C | 145 | 144 | 146 | 145 |
| | Heat of fusion | | J/g | 70 | 70 | 71 | 72 |
| | Crystallization temperature | | °C | 107 | 107 | 108 | 109 |
| | Melt flow rate | | g/10 minutes | 9.2 | 8.9 | 11 | 9.2 |
| Expanded beads | Preparation conditions of one-stage expanded beads | Temperature of blowing agent impregnation and expansion | °C | 151 | 151 | 152 | 151 |
| | | $CO_2$ equilibrium pressure | MPa(G) | 2.1 | 2.1 | 2.0 | 2.1 |
| | High temperature peak of one-stage expanded beads | | J/g | 14 | 14 | 15 | 14 |
| | Bulk density of one-stage expanded beads | | kg/m$^3$ | 60 | 58 | 51 | 55 |
| | Bulk density of two-stage expanded beads | | kg/m$^3$ | 27 | 27 | 24 | 27 |
| Toolbox-shaped molded article of expanded beads | Molding conditions | Internal pressure | MPa(G) | 0.15 | 0.15 | 0.15 | 0.15 |
| | | Cracking | % | 10 | 10 | 10 | 10 |
| | | Lowest molding pressure at which favorable molded articles are obtained | MPa(G) | 0.30 | 0.30 | 0.28 | 0.28 |
| | Physical properties | Density of molded article | kg/m$^3$ | 30 | 30 | 30 | 30 |
| | Evaluation/non-aging | Appearance | | A | A | A | A |
| | | Dimensional stability | - | A | A | A | A |
| | Evaluation/3-hour aging | Appearance | - | A | A | A | A |
| | | Dimensional stability | - | A | A | A | A |
| | Evaluation/24-hour aging | Appearance | - | A | A | A | A |
| | | Dimensional stability | - | A | A | A | A |

[Table 4]

Table 4

| | | | | Comparative Example | | | | | |
|---|---|---|---|---|---|---|---|---|---|
| | | | | 1 | 2 | 3 | 4 | 5 | 6 |
| Mixed resin material (resin particle body) | Virgin material | Name | - | Resin 1 | Resin 1 | Resin 1 | Resin 1 | Resin 1 | Resin 1 |
| | | Melting point MP1 | °C | 143 | 143 | 143 | 143 | 143 | 143 |
| | | Melt flow rate MFR1 | g/10 minutes | 7.2 | 7.2 | 7.2 | 7.2 | 7.2 | 7.2 |
| | | Crystallization temperature CP1 | °C | 100 | 100 | 100 | 100 | 100 | 100 |
| | | Heat of fusion | J/g | 70 | 70 | 70 | 70 | 70 | 70 |
| | | Flexural modulus F1 | MPa | 970 | 970 | 970 | 970 | 970 | 970 |
| | | Content in mixed resin | % by mass | - | 70 | 70 | 70 | 70 | 70 |
| | Recycled material | Name | - | - | Recycled material 3 | Recycled material 4 | Recycled material 5 | Recycled material 6 | Recycled material 7 |
| | | Melting point MP2 | °C | - | 140 | 143 | 147 | 148 | 155 |
| | | Melt flow rate MFR2 | g/10 minutes | - | 9 | 9.5 | 20 | 12 | 12.7 |
| | | Crystallization temperature CP2 | °C | - | 100 | 101 | 111 | 112 | 117 |
| | | Heat of fusion | J/g | - | 59 | 61 | 77 | 79 | 72 |
| | | Flexural modulus F2 | MPa | - | 580 | 970 | 980 | 1000 | 1050 |
| | | Ash content | ppm by mass | - | 500 | 50 | 500 | 5150 | 500 |
| | | Content in mixed resin | % by mass | - | 30 | 30 | 30 | 30 | 30 |
| | Difference (MP2-MPI) | | °C | - | -3.2 | 0.5 | 3.7 | 4.7 | 12.3 |
| | Difference (MFR2-MFR1) | | g/10 minutes | - | 1.8 | 2.3 | 12.8 | 4.8 | 5.5 |
| | Difference (CP2-CP1) | | °C | - | -0.3 | 1.0 | 10.9 | 12.1 | 16.8 |

| | | | | Comparative Example | | | | | |
|---|---|---|---|---|---|---|---|---|---|
| | | | | 1 | 2 | 3 | 4 | 5 | 6 |
| | | Ratio (F1/F2) | - | - | 1.7 | 1.0 | 1.0 | 1.0 | 0.9 |
| | Additive | Carbon black | % by mass | 2.6 | 2.6 | 2.6 | 2.6 | 2.6 | 2.6 |
| | | Zinc borate | ppm by mass | 500 | 500 | 500 | 500 | 500 | 500 |
| Resin particle | Covering layer | Name | - | Resin 2 | Resin 2 | Resin 2 | Resin 2 | Resin 2 | Resin 2 |
| | Mass ratio (resin particle body (core layer): covering layer) | | - | 97:3 | 97:3 | 97:3 | 97:3 | 97:3 | 97:3 |
| | Melting point | | °C | 145 | 142 | 143 | 145 | 146 | 150 |
| | Heat of fusion | | J/g | 72 | 67 | 67 | 72 | 73 | 71 |
| | Crystallization temperature | | °C | 107 | 100 | 100 | 107 | 110 | 113 |
| | Melt flow rate | | g/10 minutes | 9.5 | 8.9 | 9.0 | 12.1 | 9.8 | 10.0 |
| Expanded beads | Preparation conditions of one-stage expanded beads | Temperature of blowing agent impregnation and expansion | °C | 150 | 148 | 148 | 151 | 150 | 157 |
| | | $CO_2$ equilibrium pressure | MPa(G) | 2.4 | 2.6 | 2.5 | 2.0 | 1.8 | 1.9 |
| | High temperature peak of expanded beads when one-stage expansion is performed | | J/g | 14 | 14 | 14 | 14 | 16 | 18 |
| | Bulk density of expanded beads when one-stage expansion is performed | | kg/m³ | 60 | 56 | 57 | 56 | 58 | 56 |
| | Bulk density of expanded beads when two-stage expansion is performed | | kg/m³ | 25 | 26 | 27 | 27 | 27 | 26 |
| Toolbox-shaped molded article of expanded beads | Molding conditions | Internal pressure | MPa(G) | 0.15 | 0.15 | 0.15 | 0.15 | 0.15 | 0.15 |
| | | Cracking | % | 10 | 10 | 10 | 10 | 10 | 10 |
| | | Lowest molding pressure at which favorable molded articles are obtained | MPa(G) | 0.30 | 0.26 | 0.30 | 0.30 | 0.30 | 0.38 |
| | Physical properties | Density of molded article | kg/m³ | 30 | 30 | 30 | 30 | 30 | 30 |

EP 4 782 488 A1

(continued)

| | | | | Comparative Example | | | | | |
|---|---|---|---|---|---|---|---|---|---|
| | | | | 1 | 2 | 3 | 4 | 5 | 6 |
| | Evaluation/non-aging | Appearance | | A | A | A | A | A | A |
| | | Dimensional stability | - | C | C | C | C | C | C |
| | Evaluation/3-hour aging | Appearance | - | A | A | A | A | A | A |
| | | Dimensional stability | - | B | C | B | C | C | B |
| | Evaluation/24-hour aging | Appearance | - | A | A | A | A | A | A |
| | | Dimensional stability | - | A | A | A | B | B | A |

As Table 3 and Table 4 show, the toolbox-shaped molded articles obtained by in-mold molding of the expanded beads prepared by the method of the present invention exhibit excellent dimensional stability even at low molding pressure.

Industrial Applicability

The expanded beads obtained by the method of the present invention can be molded at low molding pressure and can contribute to the reduction of environmental impact. The molded article of expanded beads prepared by in-mold molding of the expanded beads obtained by the method of the present invention can be used as an impact absorbing material, a thermal insulating material, and various packaging materials, in a wide range of fields including a container for transporting food, a packaging or cushioning material for electrical, electronic, and precision components, and automobile parts, building materials such as thermal insulation materials for houses, and miscellaneous goods.

**Claims**

1. A method for producing a polypropylene-based resin expanded bead, comprising expanding polypropylene-based resin particles,

   wherein the polypropylene-based resin particles comprise a mixed resin of a virgin material comprising, as a base material resin, at least one propylene copolymer selected from the group consisting of an ethylene-propylene copolymer, a butene-propylene copolymer, and an ethylene-butene-propylene copolymer, and a polypropylene-based resin recycled material;
   the recycled material comprises, as a base material resin, at least one propylene copolymer selected from the group consisting of an ethylene-propylene copolymer, a butene-propylene copolymer, and an ethylene-butene-propylene copolymer;
   the virgin material has a melting point MP1 of 130°C or more and less than 150°C;
   a difference between a melting point MP2 (°C) of the recycled material and the melting point MP1 (°C) of the virgin material satisfies the relationship of the following formula (1);
   a difference between a melt flow rate MFR2 (g/10 minutes) of the recycled material and a melt flow rate MFR1 (g/10 minutes) of the virgin material satisfies the relationship of the following formula (2); and
   a difference between a crystallization temperature CP2 (°C) of the recycled material and a crystallization temperature CP1 (°C) of the virgin material satisfies the relationship of the following formula (3):

$$-10 < MP2 - MP1 < 10 \qquad (1)$$

$$0 \leq MFR2 - MFR1 \leq 10 \qquad (2)$$

$$2 < CP2 - CP1 < 12 \qquad (3).$$

2. The method for producing a polypropylene-based resin expanded bead according to claim 1, wherein an ash content of the recycled material is 500 ppm by mass or more and 2,000 ppm by mass or less.

3. The method for producing a polypropylene-based resin expanded bead according to claim 1 or 2, wherein the crystallization temperature of the recycled material is 105°C or more and 115°C or less.

4. The method for producing a polypropylene-based resin expanded bead according to any one of claims 1 to 3, wherein a ratio of a flexural modulus of the virgin material to a flexural modulus of the recycled material is 0.5 or more and 2.0 or less.

5. The method for producing a polypropylene-based resin expanded bead according to any one of claims 1 to 4, wherein a mixing ratio of the virgin material is 10 to 90% by mass and a mixing ratio of the recycled material is 10 to 90% by mass, provided that a total amount of the virgin material and the recycled material is 100% by mass.

6. The method for producing a polypropylene-based resin expanded bead according to any one of claims 1 to 5, wherein the recycled material is derived from a molded article of polypropylene-based resin expanded beads.

7. A method for producing a molded article of expanded beads, comprising in-mold molding the polypropylene-based resin expanded beads obtained by the method according to any one of claims 1 to 6.

[Fig. 1]

Europäisches Patentamt
European Patent Office
Office européen des brevets

# EUROPEAN SEARCH REPORT

**Application Number**

EP 25 21 8866

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/181879 A1 (KANEKA CORP [JP]) 28 September 2023 (2023-09-28) * paragraphs [0137] - [0140]; examples 1-2, 4-7; table 1 * & EP 4 502 025 A1 (KANEKA CORP [JP]) 5 February 2025 (2025-02-05) * paragraphs [0120] - [0121], [0137] - [0140]; examples 1, 2, 4-7; table 1 * | 1-7 | INV. C08J9/00 C08J9/18 C08J9/232 |
| X,P | WO 2025/187582 A1 (KANEKA CORP [JP]) 12 September 2025 (2025-09-12) * examples 1-7, 17-18; tables 1-4 * | 1-3,5-7 | |
| A | WO 2024/057883 A1 (JSP CORP [JP]) 21 March 2024 (2024-03-21) * tables 1-3 * & EP 4 588 967 A1 (JSP CORP [JP]) 23 July 2025 (2025-07-23) * paragraphs [0007], [0053] - [0056]; tables 1-3 * | 1-7 | |
| A | WO 2023/190647 A1 (KANEKA CORP [JP]) 5 October 2023 (2023-10-05) * examples 1-5; table 1 * & EP 4 502 030 A1 (KANEKA CORP [JP]) 5 February 2025 (2025-02-05) * paragraphs [0037] - [0038], [0042], [0142] - [0143], [0162], [0164] - [0167]; examples 1-5; table 1 * | 1-7 | TECHNICAL FIELDS SEARCHED (IPC) C08J |

The present search report has been drawn up for all claims

| Place of search | Date of completion of the search | Examiner |
|---|---|---|
| The Hague | 14 April 2026 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 8866

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2026

| Patent document cited in search report | | Publication date | Patent family member(s) | | Publication date |
|---|---|---|---|---|---|
| WO 2023181879 | A1 | 28-09-2023 | CN | 118946619 A | 12-11-2024 |
| | | | EP | 4502025 A1 | 05-02-2025 |
| | | | JP | WO2023181879 A1 | 28-09-2023 |
| | | | WO | 2023181879 A1 | 28-09-2023 |
| WO 2025187582 | A1 | 12-09-2025 | NONE | | |
| WO 2024057883 | A1 | 21-03-2024 | CN | 119855865 A | 18-04-2025 |
| | | | EP | 4588967 A1 | 23-07-2025 |
| | | | JP | 2024041662 A | 27-03-2024 |
| | | | KR | 20250067815 A | 15-05-2025 |
| | | | US | 20260078231 A1 | 19-03-2026 |
| | | | WO | 2024057883 A1 | 21-03-2024 |
| WO 2023190647 | A1 | 05-10-2023 | CN | 118946620 A | 12-11-2024 |
| | | | EP | 4502030 A1 | 05-02-2025 |
| | | | JP | 7806219 B2 | 26-01-2026 |
| | | | JP | 2026063159 A | 10-04-2026 |
| | | | JP | WO2023190647 A1 | 05-10-2023 |
| | | | WO | 2023190647 A1 | 05-10-2023 |

EPO FORM P0459

For more details about this annex : see Official Journal of the European Patent Office, No. 12/82

**Patent documents cited in the description**

- JP 2024041662 A
- JP S5122951 A
- JP H446217 A
- JP H649795 A
- JP H622919 A

**Non-patent literature cited in the description**

- II.2.3 2.3.4 Propylene/Ethylene Copolymers. Handbook of Polymer Analysis (Kobunshi Bunseki Handbook). Kinokuniya Bookstore, January 1995, 615-616
- *II.2.3 2.3.5 Propylene/Butene Copolymers*, 618-619